# EUROPEAN PATENT SPECIFICATION

(11) **EP 1 613 465 B1**
(45) Date of publication and mention of the grant of the patent: **09.07.2014**
(21) Application number: 04758907.2
(22) Date of filing: 05.04.2004
(51) Int. Cl.: B01D 53/22, B32B 3/10, B01D 67/00, B01D 69/10, B01D 71/02, C23C 24/04, C23C 4/02, C01B 3/50

(54) **SURFACE MODIFICATION OF POROUS METALS**
OBERFLÄCHENMODIFIKATION VON PORÖSEN METALLEN
MODIFICATION DE LA SURFACE DE METAUX POREUX

(30) Priority: 04.04.2003 US 407638; 04.04.2003 US 408058
(43) Date of publication of application: 11.01.2006
(73) Proprietor: Intelligent Energy, Inc., Long Beach, CA 90806 (US)
(72) Inventor: CHELLAPPA, Anand, Albuquerque, NM 87109, (US); POWELL, Michael, Albuquerque, NM 87107 (US); CALL, Charles, Albuquerque, NM 87107 (US)
(74) Representative: Crease, Devanand John
(86) International application number: PCT/US2004/010581
(87) International publication number: WO 2004/089500

(56) References cited:
- WO-A-96/40413
- US-A- 4 526 839
- US-A- 5 302 414
- US-A1- 2001 055 694
- US-A1- 2002 078 827
- US-B1- 6 408 928
- REJ D J ET AL: "Surface modification of AISI-4620 steel with intense pulsed ion beams" NUCLEAR INSTRUMENTS & METHODS IN PHYSICS RESEARCH, SECTION - B:BEAM INTERACTIONS WITH MATERIALS AND ATOMS, ELSEVIER, AMSTERDAM, NL, vol. 127-128, 1 May 1997 (1997-05-01), pages 987-991, XP004096888 ISSN: 0168-583X

## Description

### BACKGROUND

### 1. Field of the Invention

This invention relates generally to the surface modification of substrates, and in particular, to a the surface modification of porous metal substrates.

### 2. Description of Related Art.

The growing popularity of portable electronic devices has produced an increased demand for compact and correspondingly portable electrical power sources to energize these devices. Developments in robotics and other emerging technology applications are further increasing the demand for small, independent power sources. At present, storage or rechargeable batteries are typically used to provide independent electrical power sources for portable devices. However, the amount of energy that can be stored in storage or rechargeable batteries is insufficient to meet the need of certain applications.

Hydrogen/air fuel cells (H/AFCs) have enormous potential as a replacement for batteries. Because they can operate on very energy-dense fuels, fuel cell-based power supplies offer high energy-to-weight ratios compared with even state-of-the-art batteries. Fuel cells are of particular interest to the military, where significant efforts are being made to reduce the weight of power supplies that soldiers must carry to support high-tech, field-portable equipment. There is also considerable potential for utilizing fuel cell-based power supplies for commercial applications, particularly for portable applications, where small size and low weight are desirable.

A common H/AFC is a polymer electrolyte membrane (PEM) fuel cell. PEM fuel cells are constructed of an anode and a cathode separated by a polymer electrolyte membrane. Functionally, fuel cells generate electricity by reacting hydrogen with oxygen to produce water. Since oxygen can typically be obtained from the ambient atmosphere, only a source of hydrogen must be provided to operate a fuel cell. Merely providing compressed hydrogen is not always a viable option, because of the substantial volume that even a highly compressed gas occupies. Liquid hydrogen, which occupies less volume, is a cryogenic liquid, and a significant amount of energy is required to achieve the extremely low temperatures required to liquefy gaseous hydrogen. Furthermore, there are safety issues involved with the handling and storage of hydrogen in the compressed gas form or in the liquid form.

One method of producing hydrogen is by processing hydrocarbons such as methane (natural gas), propane, butane, and liquid fuels such as gasoline, diesel and JP-8 or oxygenates such as methanol. The choice of fuel and the choice of the method of processing, such as steam reforming, partial oxidation, and autothermal reforming, depends to a large extent on the type of service, such as, portable, stationary or automotive. Hydrogen can also be produced by cracking ammonia. The product stream from the fuel processor when a hydrocarbon feed is used contains hydrogen in addition to unreacted hydrocarbons, other products such as CO, CO2, and diluents such as nitrogen. In essence, the hydrogen concentration in the product stream can be in the 40 to 75 volumetric percent range depending on the type of fuel and the method of processing. Methods such as water gas shift and preferential oxidation are used to reduce the CO concentrations to acceptable levels of no more than 50 parts per million, but increase the complexity of the system.

One method of separating the hydrogen from the product stream concerns the use of hydrogen separation membranes. These membranes are in general composed of pure palladium or alloys of palladium and can either be supported or unsupported. Supports are usually porous ceramics with porosities in the 40 to 60 percent range. Commercial hydrogen separation membranes are unsupported and are tubular in nature. The separation membranes are composed of one tube or more than one tube that are bundled together and are designed to supply high purity hydrogen, that is, hydrogen which is greater than 99.9 percent pure. The separation membranes are generally limited to operating temperatures below 450° C due to the sealing techniques used, which is inherent to tubular configurations, and are generally costly. To reduce costs, considerable efforts have been focused on supporting thin membrane layers on porous ceramic support, with porosities in the 40 to 60 percent range. The problem with porous ceramic supports is that the adherence of a metallic membrane to a nonmetallic ceramic substrate is a major problem, particularly when the supported membrane is exposed to thermal cycling between room temperature and elevated temperatures of no less than 400° C. In this case too, the ceramic supports that are evaluated are in the form of tubes, to mimic the construction and service of unsupported commercial membrane modules.

The hydrogen separation membrane, preferably made of pure palladium or palladium alloys, is deposited on the porous substrate by techniques such as electroless plating and electroplating. The substrate is exposed to the precursor metal salts of predetermined compositions in a deliberate fashion, and the salts are subsequently decomposed to yield a metal film or membrane on the support. Achieving a uniform pin-hole or crack free membrane is reportedly influenced by the surface morphology and pore size distribution of the ceramic support. In particular, a smooth substrate surface having small pores of no more than 1 µm in diameter and uniform pore size distribution are believed to be desirable. Small pores prevent wicking or seepage of the salt precursors through the pores. A smooth surface favors a uniform membrane deposition, however some level of roughness is needed to provide adhesion. The fact that these properties are possessed by ceramic substrates makes them particularly attractive for experimentation and development efforts.

Relatively less focus and efforts have been directed towards the use of porous metal substrates. This is mainly because the porous sintered metals are relatively less porous than the ceramic substrates when compared at similar pore diameters, and therefore allows less gas flow for a defined pressure drop across a given substrate. For example, a porous stainless steel substrate rated as 0.2 µm grade has a porosity of only about 7%, and has a Darcy value of about 0.025. To achieve a high flow rate of gas to the membrane, without a large pressure drop, a porous stainless steel substrate with a porosity of about 30% and a Darcy value of about 0.2 would be useful. A porous substrate may also be rated under the Mott system. A 0.2 µm grade under the Mott system, means that the porous material can retain particles of average particle size 0.2 µm from a fluid stream and that a Mott rating as 1 µm grade has a porosity of about 30%.

However, the synthesis and sintering process during the manufacture of the metal substrates does not allow for pore size and porosity to be varied independent of one another, and to achieve a 30% porosity requires the use of 1.5 -2 µm grade porous materials.

In addition, the surface of metal substrates is relatively rough. Typically, techniques used to smoothen the surface, such as shot peening, results in pore closure and consequently decrease porosity. In addition, shot peening has a deleterious effect when the substrate contains large pores of no less than 1 µm. This is because the large metal shots that are needed cause 'pitting' of the surface and increases surface roughness.

In spite of the above negative characteristics, porous metal substrate based membranes represent a desirable feature for integration with a fuel processor for PEM cell applications. They have higher thermal conductivities than ceramics and therefore result in high heat transfer rates. They can be sealed in a relatively straightforward fashion using welding to components such as reactors, unlike ceramic substrates that need grafoil or soft metal gaskets. Inherently, the metal to metal adhesion of the membrane to the substrate can be expected to be better than that expected using metal-ceramic substrates. For PEM fuel cells applications, the need for high purity hydrogen (>99.99%), is not of considerable importance. In fact, it is believed that concentrating the purity of the hydrogen from 75 to 99 percent would be sufficient to improve fuel cell efficiencies. Additionally, CO leakage, if significant, can be handled by exposing the membrane to a methanation catalyst.

WO 96/40413 describes composite metal membranes for hydrogen separation. A tantalum foil is prepared to receive a deposited catalytic layer by cleaning the surface by ion milling.

However, it is a desideratum to produce a porous substrate with a more uniform surface to receive and or support a membrane.

### SUMMARY

To prepare a porous substrate for bonding to a membrane, the surface of the porous substrate can be modified to provide a more uniform surface with desirable porosity by surface modification. Exposure to ion beams, optionally with subsequent exposure to cold spray, can be used to modify the surface.

The invention provides a method for preparing the surface of a metallic substrate to receive a membrane according to claim 1.

According to an exemplary implementation of the method for preparing the surface of a metal substrate for deposition of a membrane, the method includes exposing a porous metal substrate to an ion beam.

According to an exemplary implementation, the method may include controlling the pore size in the surface region of a metal or metallic substrate without substantially reducing bulk porosity.

According to an exemplary implementation of the method for preparing a porous metal for membrane deposition, the method may include exposing a metal substrate to an ion beam, wherein the metal substrate has a principal surface and a variance, and wherein the variance is reduced, without substantially reducing bulk porosity, upon exposing the metal substrate to the ion beam.

According to an exemplary implementation of the method for preparing the surface of a metal substrate for deposition of a membrane, the method may include exposing a porous metal substrate to particles in a cold spray using the kinetic energy of the particles, sprayed at a high-velocity flow to bond the particles to the substrate through high-speed plastic deformation of the interacting bodies. Cold spray is generally described in U.S. patent 5,302,414 issued to Alkhimov et. al.

In one exemplary implementation the porous metal substrate has a principal surface and a variance, and wherein the surface variance is reduced upon adding material by exposing the first metal substrate to the cold spray without substantially reducing the bulk pore size of the metal substrate.

According to an exemplary implementation, a device for separating hydrogen from a stream containing non hydrogen components hydrocarbon is described. The device includes a metal substrate, wherein a surface of the metal substrate has been previously exposed to an ion beam and a hydrogen separation membrane is support thereon.

According to an exemplary implementation, a device for separating hydrogen from a stream containing non hydrogen components hydrocarbon is described. The device includes a metal substrate, wherein a surface of the metal substrate has been previously exposed to an ion beam and a hydrogen separation membrane is deposited thereon.

According to an exemplary implementation, a device for separating hydrogen from a stream containing non hydrogen components hydrocarbon is described. The device includes a metal substrate, wherein a surface of the metal substrate has been previously exposed to cold spray and a membrane has been deposited thereon.

According to an exemplary implementation, a device for separating hydrogen from a hydrocarbon fuel processor is described. The device includes a metal substrate, wherein a surface of the metal substrate has been previously exposed to a cold spray and a membrane is supported thereon.

According to an exemplary implementation of the method for preparing a metallic surface for membrane deposition, the metal substrate is first exposed to an ion beam, to reduce the variance, and then exposed to a cold spray to further reduce the variance.

According to an exemplary implementation , ion beam exposure may be used to sinter a membrane deposited on a porous surface.

Other features and advantages of the present invention will be set forth, in part, in the descriptions which follow and the accompanying drawings, wherein the preferred embodiments of the present invention are described and shown, and in part, will become apparent to those skilled in the art upon examination of the following detailed description taken in conjunction with the accompanying drawings or may be learned by practice of the present invention. The advantages of the present invention may be realized and attained by means of the instrumentalities and combinations particularly pointed out in the appendent claims.

Descriptions of exemplary embodiments are provided and reference made to the accompanying figures which form the part thereof, and in which are shown by way of illustration of specific embodiments. It is to be understood that other embodiments may be utilized and structural and functional changes may be made without departing from the scope of the present disclosure.
FIG. 1 illustrates a cross-sectional view of a porous metal substrate.
FIG. 2 illustrates an enlarged cross-sectional view of the porous metal substrate shown in FIG. 1.
FIG. 3 illustrates a cross-sectional view of the porous metal substrate shown in FIG. 1 being exposed to ion beams.
FIG. 4A illustrates a cross-sectional view of the porous metal substrate shown in FIG. 3 upon exposure to ion beams.
FIG. 4B illustrates an enlarged cross-sectional view of the porous metal substrate shown in FIG. 4A.
FIG. 5 illustrates a cross-sectional view of a membrane layer overlying the porous metal substrate shown in FIG. 4A.
FIG. 6A illustrates a cross-sectional view of the porous metal substrate shown in FIG. 1 being exposed to a cold spray.
FIG. 6B illustrates a cross-sectional view of the porous metal substrate shown in FIG. 6A after exposure to the cold spray.
FIG. 6C illustrates an enlarged cross-sectional view of the porous metal substrate shown in FIG. 6B.
FIG. 7 illustrates a cross-sectional view of a membrane layer overlying the porous metal substrate shown in FIG. 6B.
FIG. 8A illustrates a cross-sectional view of the porous metal substrate shown in FIG. 6B being exposed to ion beams.
FIG. 8B illustrates a cross-sectional view of the porous metal substrate shown in FIG. 8A after being exposed to ion beams.
FIG. 8C illustrates an enlarged cross-sectional view of the porous metal substrate shown in FIG. 8B.
FIG. 9 illustrates a cross-sectional view of a membrane layer overlying the porous metal substrate shown in FIG. 8B.

It should be appreciated that for simplicity and clarity of illustration, elements shown in the Figures have not necessarily been drawn to scale. For example, the dimensions of some of the elements are exaggerated relative to each other for clarity. Further, where considered appropriate, reference numerals have been repeated among the Figures to indicate corresponding elements.

### DETAILED DESCRIPTION

Examples of preparing the surface region of a substrate for deposition of a membrane are described within. Examples of forming a separation membrane, such as a hydrogen separation membrane, for separating a product, such a hydrogen, from a mixed product stream are described within. Mixed product streams may include hydrogen, CO, C02 and hydrocarbons, NH3, H2O. Mixed products streams from cracking ammonia may also contain nitrogen oxides and other compounds containing nitrogen.

A separation membrane is formed, bonded to, or deposited on, a porous metal substrate. To prepare the metal substrate for bonding to the membrane, a surface of the porous metal substrate is modified to provide a more uniform surface with desirable porosity by surface modification by exposing the porous metal substrate to an ion beam and optionally by exposing the porous metal substrate to particles in a cold spray. A cold spray uses the kinetic energy of the particles, sprayed at a high-velocity flow to bond the particles to the substrate through high-speed plastic deformation of the interacting bodies. Cold spray is taught generally in U.S. patent 5,302,414 issued to Alkhimov et. al.

Surface modification of the metal substrate using ion beams extends to only a few µm in depth into the metal substrate, the surface roughness of the porous metal substrate is decreased without affecting the remainder of the metal substrate bulk porosity of the metal substrate. In some instance the surface pore diameter may be reduced also without affecting the remainder of the metal substrate bulk porosity of the metal substrate.

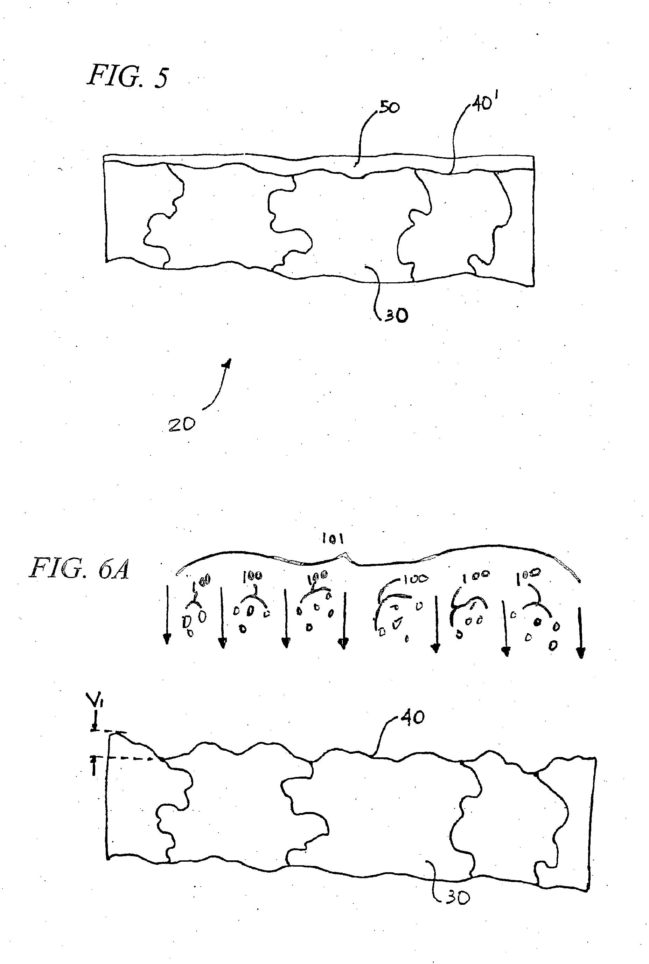

Shown in FIG. 5 is a separation membrane 20 which includes a membrane 50 on a metal substrate 30. Separation membrane 20 is used to separate a product, such a hydrogen, from a mixed product stream. A separation membrane 20 may be used to separate any combination of products from a product stream. Preferably, the separation membrane 20 is a hydrogen separation membrane used to separate hydrogen from the mixed product stream. Multiple separation membranes 20 may be combined together. Separation membranes may form various shapes, such as cylinders, boxes, and tubes.

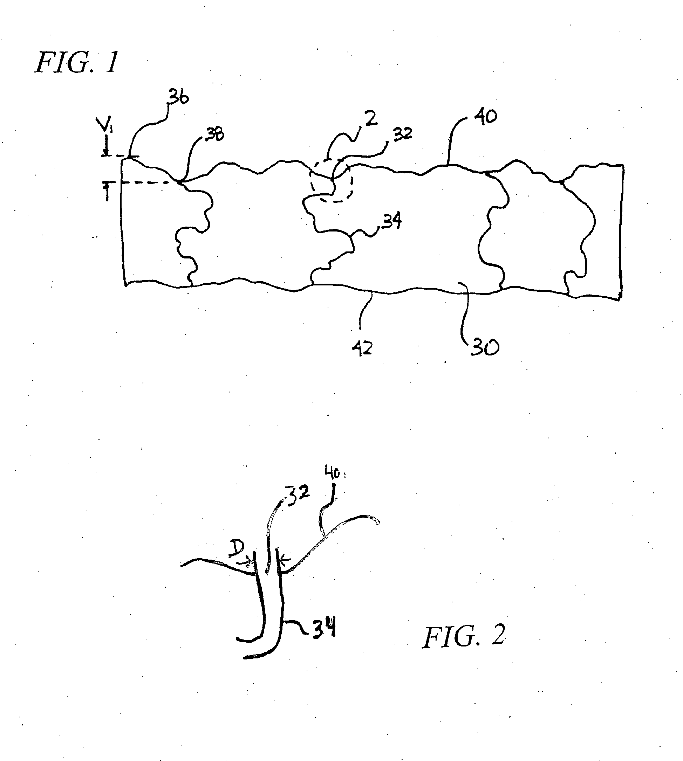

Shown in FIG. 1, in cross-section, is the porous metal substrate 30 prior to processing for use as part of the separation membrane 20. The metal substrate 30 has a principal surface 40 opposed to a second surface 42. The thickness of the metal substrate 30 is determined by the average distance from the principal surface 40 to the second surface 42. Preferably, the thickness of the metal substrate 30 is between 1 0.5 and 100 3 millimeters. The metal substrate 30 also comprises a series of pores 32 that form channels 34 through the metal substrate 30. As defined herein, the pores 32 define openings to the channels 34. The diameter D of the pores 32, in the metal substrate at the surface region 41 and the body region 43 are substantially the same before exposure to the ion beam as, illustrated in FIG. 2. Before treatment with the ion beam, preferably, the diameter D of pores 32 is between about 1 and 100 µm, and more preferably between 15 and 50 µm.

Preferably the bulk porosity of the metal substrate 30, before and after exposure to the ion beam is greater than about 30% which corresponds to a Darcy value of about 0.22. The bulk porosity of the metal substrate 30 is can be described by a Darcy value (which value of 1.0 represents a flow of 1cc of 1cP (viscosity) fluid in 1 second at approx. 101 kPa (1 atmosphere) pressure through a 1 cm2 x 1 cm thick section of porous media.).

The principal surface 40 of the metal substrate 30 consists of a series of peaks and valleys. The variance "V" of the metal substrate 30 is a measure of the surface roughness determined by the measuring the distance between the tallest peak and lowest valley in the principal surface 40. The initial variance V₁ of the metal substrate 30 is defined herein as the distance between the tallest initial peak 36 and the lowest initial valley 38. Preferably, the initial variance V₁ of the metal substrate 30 is between 1 and 50 µm.

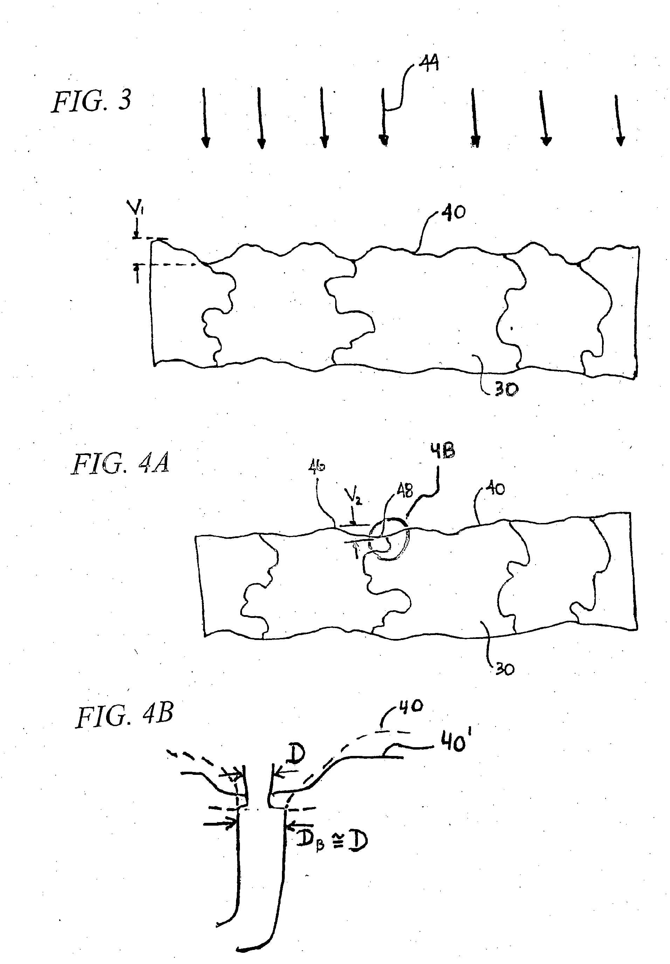

In order to reduce the variance V which will increase uniformity and/or smoothness in the principal surface 40, the principal surface 40 is modified by exposing the principal surface 40 to ion beams 44, as illustrated in FIG. 3. For example, the metal substrate 30 may be place in an pulsed ion beam generator, and subjected to Ion Beam Surface Treatment (IBest) as practiced by QM Technologies in Albuquerque, NM provides such ion beam treatment. Once inside the ion beam generator machine, ion beams 44 are generated and directed at the principal surface 40 of the metal substrate 30. The energy and duration of the ion beams may be modified depending on the desired results. For example, in order to reduce to the variance (surface roughness) of a metal substrate 40. Preferably to an average variance of less than about 10 µm, more preferably to an average variance of less than about 5 µm and most preferably to a variance of about 1 µm.

To reduce the average variance the metal substrate 30 is be exposed to ion beams 44 having an energy of between 1 to 10 J/cm2 for a duration of 100 to 150 nano seconds per pulse; the treatment comprising between 1 and 10 pulses. The optimal energy and duration of the output will vary with the composite of the metal substrate and/or its initial porosity.

Once exposed to the ion beams, the variance V is reduced from the initial variance V₁ to a reduced variance V₂. The reduced variance V₂ of the metal substrate 30 is defined herein as the distance between the tallest reduced peak 46 and the lowest reduced valley 48, as illustrated in FIG. 4A. Preferably, the initial variance V₁ is reduced by about fifty percent upon exposing the metal substrate 30 to the ion beam 44.

Because the ion beam only extends a few µm into the surface region 41 into the metal substrate 30, wherein it heats up and melts the surface region 41 exposure of the metal substrate 30 to an ion beam 44, can reduce the initial variance V₁ or surface roughness of the principal surface 40 without substantially altering the bulk porosity of the metal substrate 40. As shown in FIG. 4B, exposure to the ion beam also has an insubstantial effect on the average diameter DB of the pore size, in the body region 43 of the metal substrate 30. Thus, exposing the metal substrate 30 to ion beams 44 allows the variance V₁ of the principal surface 40 to be reduced before depositing a membrane 50. Upon reducing the variance V of the metal substrate 30 from the initial variance V₁ to the reduced variance V₂, a membrane 50 can be deposited on the principal surface 40 of the metal substrate 30 forming the separation membrane 20.

The above described exposure to the ion beam does not substantially reduce the bulk porosity of the metal substrate. However, in some case the exposure to ion beams can also reduce the average coating surface pore size D_{C} in the surface region 41 while the average pore diameter D_{B} in the body region 43 is substantially unaltered. Thus maintaining the bulk porosity. As shown in FIG. 4B the alteration of the average coating pore size D_{C} in the surface region 41 forms a "bottleneck" 45. Preferably the exposure to the ion beam is sufficient to reduce the average coating pore size D_{C} in the surface region to about 10 to 20 µm, more preferably to about 5 to 10 µm and most preferably to about 1 to 5 µm. Thereafter, as shown in FIG. 5, a membrane 50, such as a hydrogen separation membrane, can be deposited on the principal surface 40. Preferably, the membrane 50 has a thickness of between 1 and 10 µm.

A membrane 50 formed of pure palladium or palladium alloys, is useful to separate hydrogen gas, from a mixed product stream. Such a palladium or palladium alloys membrane is commonly deposited by techniques that include, but not limited to such as electroless plating and electroplating. During electroless plating, the substrate is exposed to the precursor metal salts of predetermined compositions in a deliberate fashion, and the salts are subsequently decomposed to yield a metal film or membrane on the metal substrate 30. Small pore size in the surface region 41 favors uniform membrane 50 deposition. Small pores prevent wicking or seepage of the salt precursors through the pores.

Preferably, a palladium or alloys of palladium the membrane 50 has a thickness of between 1 and 10 µm. In general, the forming a thinner membrane saves costs and materials. From a process standpoint, a thinner membrane is preferred as the hydrogen flux (flow rate per unit area) through the membrane is inversely proportional to membrane thickness. Additionally, if the membrane is applied in excess of about 20 µm it can lead to process inefficiencies and higher costs, particularly when the hydrogen separation device is part of the fuel processor for producing hydrogen.

If the membrane deposited on the ion beam treated surface is found to contain some minor flaws, holes or defects, ion beam treatment can be used to rectify them by melting a portion of the membrane which can remove the defect or flaw. The membrane deposition process can be repeated as a finishing step.

A substrate treated with an ion beam may then be treated with a cold spray to further modify the surface. Alternatively a substrate treated with a cold spray may then be treated with an ion beam to further modify the surface.

Cold spray is used to apply a coating of fill-material to the surface. Application of the coating is by spraying a gas with fill material particles therein and is typically. A high-velocity flow of a material which is in solid state. The term "cold spray" comes from the fact that the temperature at which the spray is occurring is lower than the melting point of the material. One suitable fill material is stainless steel powder (<400 mesh, 40 µm). Other materials include, but is not , limited to nickel , aluminum, copper, chromium.

The type of material used is dependant on the operating temperature of the device to which the cold spray is applied. For instance in a hydrogen separation device which operates at temperature less 400°C, aluminum or copper could be used as the material of choice. Alternately, materials such as chromium which have a high melting point (1907°C) would be beneficial in a higher temperature device because in addition to modifying the surface of the porous substrate, they also help prevent inter-metallic diffusion between a palladium membrane and the porous substrate. Inter-metallic diffusion can reduce the hydrogen flux through the membrane. Palladium being a membrane material often in conjunction with hydrogen separation.

The cold spray gas - fill material mixture should be imparted an acceleration from 300 to 1200 m/s to provide an adequate kinetic energy to the material to cause bonding. Suitable carrier gases include air, nitrogen, and helium. The process used by KTech Corporation (Albuquerque, NM) for applying corrosion resistance coatings, conductive coatings or for metallization of plastics is a suitable commercially available cold spray process.

The kinetic energy of the impact of the fill material on the metal substrate is spent for high-speed plastic deformation of the interacting fill material and metal substrate.

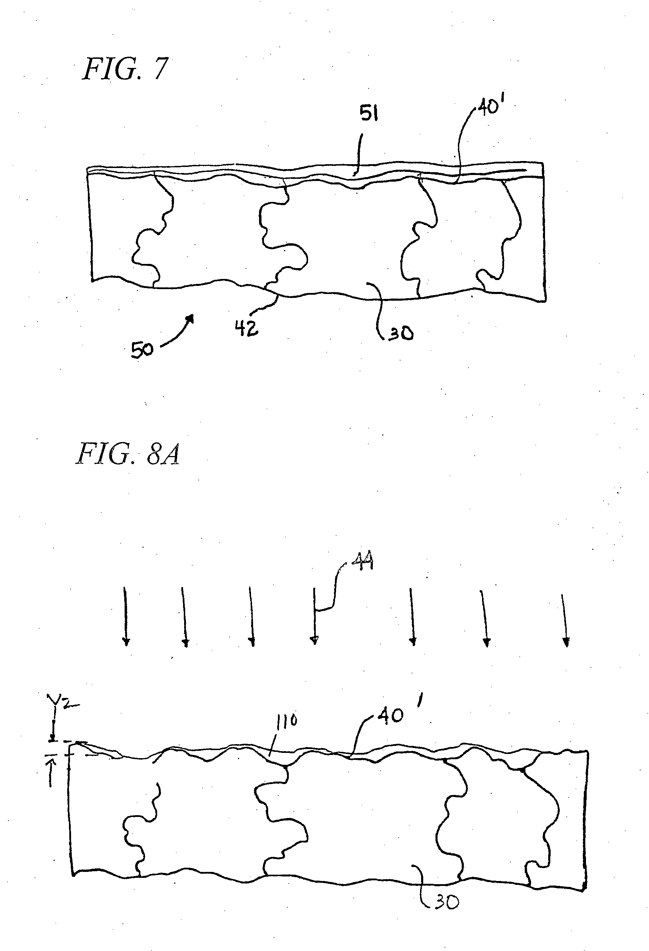

Shown in FIG. 7 is a separation membrane 50 which includes a membrane 51 on a metal substrate 30. A coating 110 of fill material 100 has been bonded to at least a portion of the surface 40 of the metal substrate 30 to provide a more uniform surface for membrane 50 deposition. The separation membrane 20 is used to separate a product, such a hydrogen, from a mixed product stream.

The separation membrane 20 can be a hydrogen separation membrane used to separate hydrogen from, for example reformed hydrocarbons. Membranes deposited on either side of a metal substrate may be advantageous to provide a separation membrane with membranes on both the principal surface 40 and a second surface 42 (the deposited membrane is not shown on the second surface 42) to achieve a higher purity. A defect on the membrane on one surface may be compensated by a defect free membrane on the opposing surface.

Shown in FIG. 6A, in cross-section, is a porous metal substrate 30 prior to processing for use as part of the separation membrane 20 (as shown in FIG. 1). The metal substrate 30 has a principal surface 40 opposed to a second surface 42. The thickness of the metal substrate 30 is determined by the average distance from the principal surface 40 to the second surface 42. Preferably, the thickness of the metal substrate 30 is between about 0.5 millimeters and about 5 millimeters. The metal substrate 30 also comprises a series of pores 32 that form channels 34 through the metal substrate 30. As defined herein, the pores 32 define openings to the channels 34. The pore diameter D of the metal substrate 30, as illustrated in FIG. 2, may vary. Before treatment with the cold spray, preferably, the pore diameter D is between about 1 and 100 µm, and more preferably between 15 and 50 µm.

Preferably the bulk porosity of the metal substrate 30, before exposure to the cold spray is greater than about 30% which corresponds to a Darcy value of about 0.22. The Darcy value represents a flow of 1cc of 1cP (viscosity) fluid in 1 second at approx. 101kPa (1 atmosphere) pressure through a 1 cm2 x 1 cm thick section of porous media.

The principal surface 40 of the metal substrate 30 consists of a series of peaks and valleys. The variance "V" of the metal substrate 30 is a measure of the surface roughness determined by the measuring the distance between the tallest peak and lowest valley in the principal surface 40. The initial variance V₁ of the metal substrate 30 is defined herein as the distance between the tallest initial peak 36 and the lowest initial valley 38. Preferably, the initial variance V₁ of the metal substrate 30 is between 1 and 50 preferably less than 50 µm.

In order to reduce the variance V in the principal surface 40 of the metal substrate 30, the principal surface 40 is modified by application of a cold spray stream 10, as illustrated in FIG. 6A. Commonly, cold spray is applied in an application chamber, one such chamber is manufactured by KTech Corporation in Albuquerque, NM.

Application of the fill material by cold spray at the principal surface 40 of the metal substrate 30 can reduce the variance ( surface roughness) of the metal substrate 40 by adding the fill material 100 in the cold spray stream 101 to the principal surface 40 of the metal substrate 30. Preferably to an average variance of less than about 20 µm, more preferably to an average variance of less than about 10 µm and most preferably to a variance of about 5 µm.

To add or bond the fill material 100 to the metal substrate 30 the cold spray stream 101 may be applied to the surface of the metal substrate 40 at a gas flow rate of between 30 and 100 cfm.

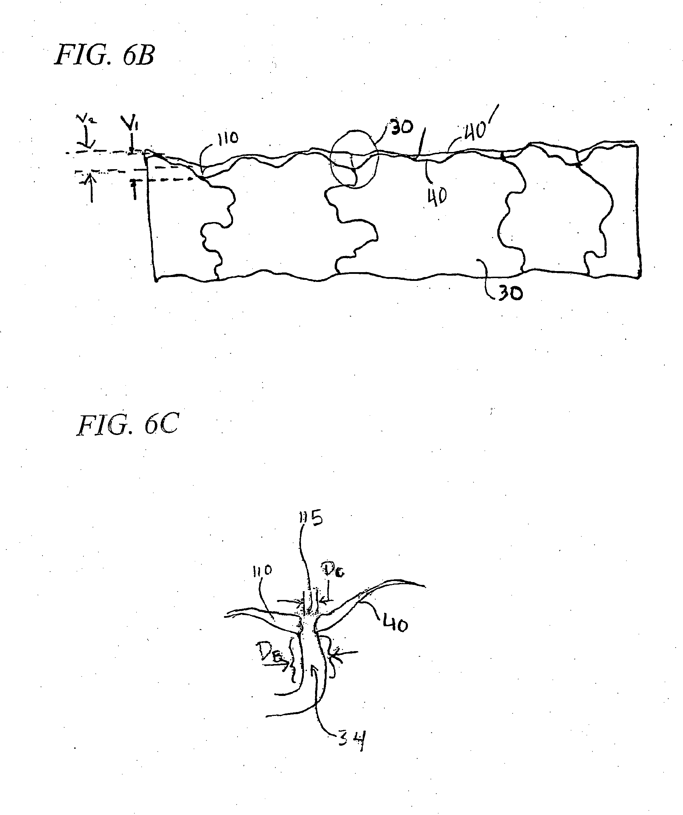

After the cold spray stream 101 is applied, the variance V is reduced from the initial variance V₁ to a secondary variance V₂. The secondary variance V₂ of the metal substrate 30 is defined herein as the distance between the tallest peak 46 and the lowest reduced valley 48, as illustrated in FIGS. 6B and 6C. Preferably, the initial variance V₁ is reduced by at least fifty percent upon exposing the metal substrate 30 to the cold spray stream 101 and depositing a coating 110 of the fill material 100. Preferably, the secondary variance V₂ of the metal substrate 30 is between 1 and 10 µm.

Adding material 100 to the principal surface 40 with the cold spray stream 101 can be used to reduce the initial variance V₁ or surface roughness of the principal surface 40 without substantially altering the bulk porosity of the metal substrate 30.

By controlling the particle size of the material 100 and tailoring the flow rate and exposure time of the cold spray stream 101 the coating pore size D_{C} can be left substantially the same as the average body region pore diameter D_{B}. Alternatively, the coating pore size D_{C} can be reduced to a diameter less than the pore diameter body region D_{B}, which is preferred.

Accordingly, the coating 110 deposited by cold spray can both reduce the variance V (wherein V₂ < V₁) of the coated principal surface 40' (to increase uniformity or smoothness) by filling in the valleys. Cold spray may also reduce the diameter of the top portion 115 of the pores 34 to the diameter of the coating pore size D_{C} without substantially changing the average body region pore diameter D_{B}. For hydrogen separation membranes it is generally preferred to have a body region pore diameter D_{B} of about less than 10 µm and a coating pore size D_{C} of less than about 5 µm and a coating pore size D_{C} of less than about 5 µm and more preferably to reduce the coating pore size Dc to less than about 1 µm.

In addition to providing a more uniform coated principal surface 40' as shown in FIG. 6B, and providing reduced size coating pore size D_{C} to facilitate membrane deposition, as shown in FIG 6C, limiting the reduction in the pore 34 size to the coating pore size D_{C} which is at the top portion 115 provides the added benefit of not substantially changing the bulk porosity of the metal substrate 30. High bulk porosity is preferred as it reduces pressure drops across the separation membrane 20.

A hydrogen separation membrane 50/51 shown in FIGS. 5 and 7, commonly formed of pure palladium or palladium alloys can be deposited on the porous substrate by techniques such as that include, but is not limited to electrolyses electroless plating and electroplating. During electroless plating, the substrate is exposed to the precursor metal salts of predetermined compositions in a deliberate fashion, and the salts are subsequently decomposed to yield a metal film or membrane on the metal substrate 30. Small pore size in the surface region 41 favors uniform membrane 50/51 deposition. Small pores prevent wicking or seepage of the salt precursors through the pores.

Preferably, a membrane 50/51 of pure palladium or alloys of palladium has a thickness of between 1 and 10 µm. The forming a thinner membrane saves costs and materials. From a process standpoint, a thinner membrane is preferred as the hydrogen flux through the membrane is inversely proportional to membrane thickness. Additionally, if the membrane is applied in excess of about 20 µm it can lead to process inefficiencies and higher costs, particularly when the hydrogen separation device is part of the fuel processor for producing hydrogen.

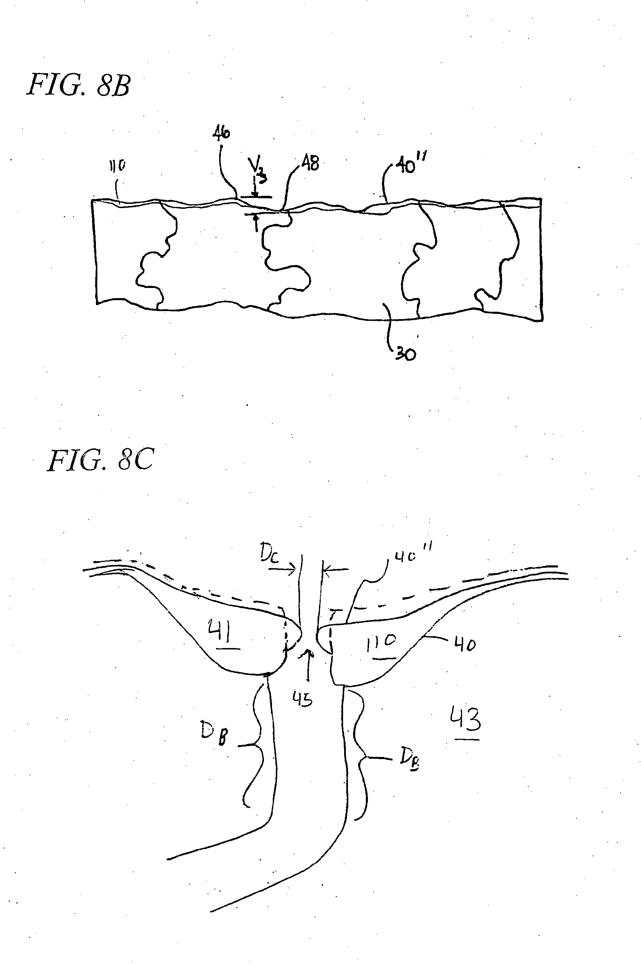

To further reduce the secondary variance V₂ (increase uniformity and/or smoothness) of the coated principal surface 40' of the metal substrate 30 prior to membrane 50 deposition, the coated principal surface 40' can be modified by exposing the coated principal surface 40' to ion beams 44, as illustrated in FIG. 8A. Once inside the ion beam generator machine, pulsed ion beams 44 are generated and directed at the coated principal surface 40' of the metal substrate 30. The energy and duration exposure time of the ion beams may be modified depending on the desired results. For example, ion beam treatment can be used in order to reduce to the variance of a metal substrate 30 preferably to an average variance of less than about 10 µm, more preferably to an average variance of less than about 5 µm and most preferably to a variance of about 1 µm.

To reduce the average variance the metal substrate 30 is be exposed to ion beams 44 having an energy of between 1 to 5 J/cm2 for a duration of 100 to 150 nanoseconds. The optimal energy and duration of the output will vary with the composite of the metal substrate and/or its initial porosity.

Once exposed to the ion beams, the variance V is reduced from the secondary variance V₂ to a tertiary variance V₃. The reduced variance V₂ of the metal substrate 30 is defined herein as the distance between the tallest reduced peak 46 and the lowest reduced valley 48, as illustrated in FIG. 8A. Preferably, the secondary variance V₂ is reduced by about fifty percent upon exposing the metal substrate 30 to the ion beam 44.

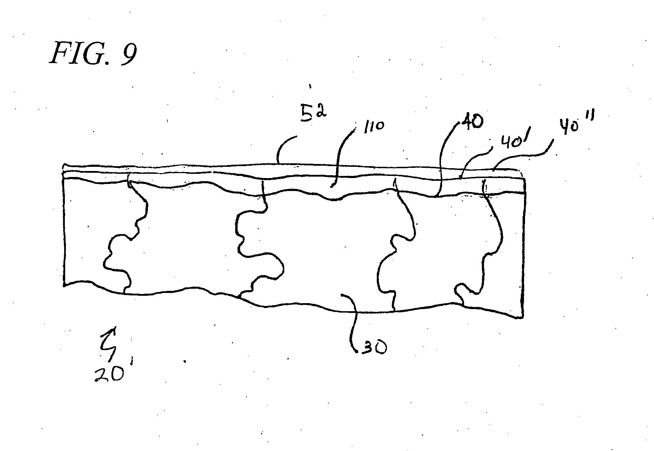

Because the ion beam only extends a few µm into the surface region 41 into the metal substrate 30, wherein it heats up and melts the surface region 41, exposure of the metal substrate 30 to an ion beam 44 can reduce the secondary variance V₂ of the coated principal surface 40' without substantially altering the bulk porosity of the metal substrate 30. As shown in FIG. 8C, exposure to the ion beam also has an insubstantial effect on the average diameter D_{B} of the pore size, in the body region 43 of the metal substrate 30. Thus, exposing the metal substrate 30 to ion beams 44 allows the secondary variance V₂ of the principal coated surface 40' to be reduced before depositing a membrane 52. Upon reducing the variance V of the metal substrate 30 from the secondary variance V₂ to the tertiary variance V₃, a membrane 52 can be deposited (FIG. 9) on the modified coated principal surtace 40" of the metal substrate 30 forming the separation membrane 20'.

The above described exposure to the ion beam does not substantially reduce the bulk porosity of the metal substrate. However, in some case the exposure to ion beams can also reduce the average coating pore size D_{C} in the surface region 41 while the average pore diameter D_{B} in the body region 43 is substantially unaltered, t. Thus maintaining the bulk porosity. As shown in FIG. 8C the alteration of the average coating pore size D_{C} in the surface region 41 forms a "bottleneck" 45. Preferably the exposure to the ion beam is sufficient to reduce the average coating pore size D_{C} in the surface region to about 10 to 20 µm, more preferably to about 5 to 10 µm and most preferably to about 1 to 5 µm. Thereafter, as shown in FIG. 9 a membrane 52, such as a hydrogen separation membrane, can be deposited on the modified coated principal surface 40". Preferably, the membrane 50 has a thickness of between 1 and 10 µm.

It should be apparent to those skilled in art, that the surface region of the porous metal substrate may be exposed to the ion beam first and then the cold spray may be applied to prepare the porous metal substrate for membrane deposition and that reordering the steps of ion beam exposure and cold spray application is within the intended scope.

Since certain changes may be made in the above apparatus without departing from the scope of the invention herein involved, it is intended that all matter contained in the above description, as shown in the accompanying drawing, shall be interpreted in an illustrative, and not a limiting sense. It is not intended that the invention be limited to the illustrative embodiments; the invention is defined by the appended claims.

## Claims

1. A method for preparing the surface of a metallic substrate to receive a membrane, the method comprising:
exposing a metal substrate to an ion beam, the metal substrate prior to exposure to the ion beam having a principal surface with an initial variance (V₁), defined as the distance between the tallest initial peak and the lowest initial valley of the principal surface, and a bulk porosity of between 7 and 60 percent; and,
reducing the variance to a reduced variance (V₂), defined as the distance between the tallest reduced peak and the lowest reduced valley of the principal surface subsequent to exposure to the ion beam;
**characterised in that** the metal substrate, subsequent to exposure to the ion beam, has a bulk porosity of between 7 and 60 percent;
and wherein the metal substrate is placed in a pulsed ion beam generator and subjected to ion beam surface treatment.

2. The method of claim 1, wherein:
the pulsed ion beam surface treatment has an energy between 1 to 10 J/cm² for a duration of 100 to 150 nanoseconds per pulse.

3. The method of claim 2, wherein:
the pulsed ion beam surface treatment comprises between 1 and 10 pulses.

4. The method of claim 1, wherein:
the initial variance (V₁) is reduced by about 50% upon exposing the metal substrate to the ion beam.

5. The method of claim 1, wherein the initial variance (V₁) is between 1 and 50 µm.

6. The method of claim 1, wherein the reduced variance (V₂) is less than 10 µm, less than 5 µm or about 1 µm.

7. The method of claim 1, wherein:
the metal substrate, prior to exposure to the ion beam, has a Darcy value of between 0. 1 and 100; and,
the metal substrate, subsequent to the exposure to the ion beam, has a Darcy value of between 0.1 and 100.

8. The method of claim 1, wherein the average diameter of the pores at the surface region is reduced after exposure to the ion beam.

9. The method of claim 1, further comprising depositing a membrane on the metal substrate.

10. The method of claim 9, wherein the membrane contains at least palladium.

11. The method of claim 9, wherein the membrane has a thickness of between 1 and 10 µm.

12. The method of claim 1, wherein subsequent to exposure to the ion beam the metal substrate is exposed to a cold spray.

13. The method of claim 9, wherein the membrane is permeable to hydrogen.

14. The method of claim 9, wherein defects, such as holes, in the deposited membrane, are treated by an ion beam application which melts at least a portion of the membrane.

## Patentansprüche

1. Verfahren zum Vorbereiten der Oberfläche eines metallischen Substrats, um eine Membran aufzunehmen, wobei das Verfahren Folgendes umfasst:
Einwirken auf ein Metallsubstrat mit einem Ionenstrahl, wobei das Metallsubstrat vor der Einwirkung des lonenstrahls eine Hauptoberfläche mit einer Ausgangsabweichung (V₁), definiert als der Abstand zwischen der höchsten Ausgangsspitze und dem tiefsten Ausgangstal der Hauptoberfläche, und einer Volumenporosität von zwischen 7 und 60 Prozent aufweist; und
Reduzieren der Abweichung auf eine reduzierte Abweichung (V₂), definiert als der Abstand zwischen der höchsten reduzierten Spitze und dem tiefsten reduzierten Tal der Hauptoberfläche, anschließend an die Einwirkung des lonenstrahls;
**dadurch gekennzeichnet, dass** das Metallsubstrat anschließend an die Einwirkung des lonenstrahls eine Volumenporosität von zwischen 7 und 60 Prozent aufweist;
und wobei das Metallsubstrat in einen Impulsionenstrahlerzeuger platziert und Ionenstrahl-Oberflächenbehandlung unterzogen wird.

2. Verfahren nach Anspruch 1, wobei:
die Impulsionenstrahl-Oberflächenbehandlung eine Energie zwischen 1 bis 10 J/cm² für eine Dauer von 100 bis 150 Nanosekunden pro Impuls aufweist.

3. Verfahren nach Anspruch 2, wobei:
die Impulsionenstrahl-Oberflächenbehandlung zwischen 1 und 10 Impulse umfasst.

4. Verfahren nach Anspruch 1, wobei:
die Ausgangsabweichung (V₁) beim Einwirken auf das Metallsubstrat mit einem Ionenstrahl um ungefähr 50 % reduziert wird.

5. Verfahren nach Anspruch 1, wobei die Ausgangsabweichung (V₁) zwischen 1 und 50 µm beträgt.

6. Verfahren nach Anspruch 1, wobei die reduzierte Abweichung (V₂) weniger als 10 µm, weniger als 5 µm oder ungefähr 1 µm beträgt.

7. Verfahren nach Anspruch 1, wobei:
das Metallsubstrat vor der Einwirkung des lonenstrahls einen Darcy-Wert von zwischen 0,1 und 100 aufweist; und
das Metallsubstrat anschließend an die Einwirkung des lonenstrahls einen Darcy-Wert von zwischen 0,1 und 100 aufweist.

8. Verfahren nach Anspruch 1, wobei der durchschnittliche Durchmesser der Poren an der Oberflächenregion nach der Einwirkung des lonenstrahls reduziert ist.

9. Verfahren nach Anspruch 1, weiter umfassend das Abscheiden einer Membran auf dem Metallsubstrat.

10. Verfahren nach Anspruch 9, wobei die Membran mindestens Palladium enthält.

11. Verfahren nach Anspruch 9, wobei die Membran eine Dicke von zwischen 1 und 10 µm aufweist.

12. Verfahren nach Anspruch 1, wobei das Metallsubstrat anschließend an die Einwirkung des lonenstrahls einem Kaltgasspritzen ausgesetzt wird.

13. Verfahren nach Anspruch 9, wobei die Membran für Wasserstoff durchlässig ist.

14. Verfahren nach Anspruch 9, wobei Fehler, wie etwa Löcher, in der abgeschiedenen Membran durch eine Ionenstrahlanwendung behandelt werden, die mindestens einen Abschnitt der Membran schmilzt.

## Revendications

1. Procédé pour préparer la surface d'un substrat métallique à recevoir une membrane, le procédé comprenant :
l'exposition d'un substrat métallique à un faisceau d'ions, le substrat métallique ayant, avant l'exposition au faisceau d'ions, une surface principale ayant une variance initiale (V₁), définie comme la distance entre le pic initial le plus haut et la vallée initiale la plus basse de la surface principale, et une porosité volumique entre 7 et 60 pour cent ; et
la réduction de la variance à une variance réduite (V₂), définie comme la distance entre le pic réduit le plus haut et la vallée réduite la plus basse de la surface principale à la suite de l'exposition au faisceau d'ions ;
**caractérisé en ce que** le substrat métallique, à la suite de l'exposition au faisceau d'ions, a une porosité volumique entre 7 et 60 pour cent ;
et dans lequel le substrat métallique est placé dans un générateur de faisceaux d'ions pulsés et soumis à un traitement de surface par faisceau d'ions.

2. Procédé selon la revendication 1, dans lequel :
le traitement de surface par faisceau d'ions pulsés a une énergie entre 1 à 10 J/cm² pendant une durée de 100 à 150 nanosecondes par impulsion.

3. Procédé selon la revendication 2, dans lequel :
le traitement de surface par faisceau d'ions pulsés comprend entre 1 et 10 impulsions.

4. Procédé selon la revendication 1, dans lequel :
la variance initiale (V₁) est réduite d'environ 50 % lors de l'exposition du substrat métallique au faisceau d'ions.

5. Procédé selon la revendication 1, dans lequel la variance initiale (V₁) est entre 1 et 50 µm.

6. Procédé selon la revendication 1, dans lequel la variance réduite (V₂) est inférieure à 10 µm, inférieure à 5 µm ou d'environ 1 µm.

7. Procédé selon la revendication 1, dans lequel :
le substrat métallique, avant exposition au faisceau d'ions, a une valeur de Darcy entre 0,1 et 100 ; et,
le substrat métallique, à la suite de l'exposition au faisceau d'ions, a une valeur de Darcy entre 0,1 et 100.

8. Procédé selon la revendication 1, dans lequel le diamètre moyen des pores au niveau de la région de surface est réduit après exposition au faisceau d'ions.

9. Procédé selon la revendication 1, comprenant en outre le dépôt d'une membrane sur le substrat métallique.

10. Procédé selon la revendication 9, dans lequel la membrane contient au moins du palladium.

11. Procédé selon la revendication 9, dans lequel la membrane a une épaisseur entre 1 et 10 µm.

12. Procédé selon la revendication 1, dans lequel à la suite de l'exposition au faisceau d'ions, le substrat métallique est exposé à une pulvérisation à froid.

13. Procédé selon la revendication 9, dans lequel la membrane est perméable à l'hydrogène.

14. Procédé selon la revendication 9, dans lequel des défauts, tels que des trous, dans la membrane déposée, sont traités par une application de faisceau d'ions qui fait fondre au moins une partie de la membrane.
